# EUROPEAN PATENT APPLICATION

(11) **EP 4 625 267 A1**
(43) Date of publication of application: **01.10.2025**
(21) Application number: 24305478.0
(22) Date of filing: 28.03.2024
(51) Int. Cl.: G06N 10/40

(54) **DEVICE FOR PERFORMING LOCAL ROTATIONS ON QUBITS OF AN ARRAY OF QUBITS**

(71) Applicant: Pasqal, 91300 Massy (FR)
(72) Inventor: SCHOLL, Pascal, 91300 MASSY (FR); DREON, Davide, 91300 MASSY (FR)
(74) Representative: Lavoix

(57) **Abstract**

The invention relates to a device (18) for performing local rotations on qubits of an array of qubits, the device (18) comprising an optical phase modulation device suitable to:
- receive a laser beam,
- locally encode a phase pattern on the received laser beam so as to obtain an encoded laser beam, the encoded laser beam having different zones of phase, and
- transmit the encoded laser beam to the array of qubits,
the position of the phase pattern on the received laser beam being chosen so that each zone of phase of the encoded laser beam be applied on a specific qubit or group of qubits of the array of qubits, the local rotations of the qubits of the array of qubits depending on the phase of the encoded laser beam at the location of each qubit.

## Description

### TECHNICAL FIELD OF THE INVENTION

The present invention concerns a device for performing local rotations on qubits of an array of qubits. The present invention concerns also an associated assembly. The present invention deals also with an associated quantum system. The present invention further concerns a method for performing local rotations on qubits of an array of qubits.

### BACKGROUND OF THE INVENTION

Over the last decade, a few ways of addressing single atoms have been demonstrated. Among them, the most common approach is to generate from a global beam an array of focused light beams which is overlapped with the atom array. This can be achieved via phase modulation of the light, beam deflection, or micro-lens arrays. However, this technique suffers from limitations, both on the theory side and practical side.

First on a theory perspective, this technique alone cannot be used to perform rotations along arbitrary axes using a single light pulse. In practice, this method is used to perform a rotation with a given axis on a specific set of atoms, leaving the other atoms untouched.

Second on a practical point of view, the fidelity of such local rotation suffers from having an array of small beams on the atoms, induced by the inherent thermal/quantum spread of the atom in the tweezer, and the imperfect overlap between the addressing pattern and the atom array, which is strongly sensitive to opto-mechanical noises.

### SUMMARY OF THE INVENTION

Hence, there exists a need for a solution enabling to perform local rotations along arbitrary axes of qubits of an array of qubits with an improved fidelity.

To this end, the invention relates to a device for performing local rotations on qubits of an array of qubits, the device comprising an optical phase modulation device suitable to:
- receive a laser beam,
- locally encode a phase pattern on the received laser beam so as to obtain an encoded laser beam, the encoded laser beam having different zones of phase, and
- transmit the encoded laser beam to the array of qubits,
the position of the phase pattern on the received laser beam being chosen so that each zone of phase of the encoded laser beam be applied on a specific qubit or group of qubits of the array of qubits, the local rotations of the qubits of the array of qubits depending on the phase of the encoded laser beam at the location of each qubit.

The device according to the invention may comprise one or more of the following features considered alone or in any combination that is technically possible:
- the optical phase modulation device is suitable to encode a different phase pattern on some same zones of the received laser beam at two successive times, the local rotations of the qubits of the array of qubits depending on the phase difference of the encoded laser beam received by each qubit between the two successive times;
- the optical phase modulation device comprises a spatial light modulator;
- the device comprises a wavefront verification unit, the wavefront verification unit being suitable to measure at successive times the phase of the encoded laser beam at the array of qubits;
- the wavefront verification unit is suitable to check whether the measured phase differences between successive times comply with predetermined phase differences;
- the wavefront verification unit comprises:
   - a phase sensitive unit suitable to measure the phase of a wavefront, and
   - a separation unit suitable to separate the encoded laser beam into two sub-beams, and to send one sub-beam to the array of qubits and the other sub-beam to the phase sensitive unit;
- the phase sensitive unit comprises a wavefront analyzer comprising a micro-lens array suitable to measure the wavefront locally, the wavefront analyzer being preferably a Shack-Hartmann wavefront analyzer;
- the device comprises an optical unit suitable to transmit the encoded laser beam from the optical phase modulation device (to the array of qubits; and
- the optical unit is suitable for modifying the size of the encoded laser beam between the encoded laser beam and the array of qubits and/or to steer or multiplex the encoded laser beam so as to apply the encoded laser beam on only some of the qubits of the array of qubits.

The invention also deals with an assembly comprising:
- a laser beam generator suitable to generate a laser beam, and
- a device for performing local rotations on qubits of an array of qubits as previously described, the device being suitable to receive the laser beam generated by the laser beam generator.

The invention also relates to a quantum system comprising a generator of an array of qubits and an assembly as previously described.

The quantum system according to the invention may be such that the qubits of the array of qubits are particles such as neutral atoms, superconducting qubits, Nitrogen-Vacancy centers, Silicon-Vacancy centers, ions, molecules and quantum dots.

The invention also relates to a method for performing local rotations on qubits of an array of qubits, the method being implemented by a device as previously described and comprising the following steps:
- receiving a laser beam,
- locally encoding a phase pattern on the received laser beam so as to obtain an encoded laser beam, the encoded laser beam having different zones of phase, and
- transmitting the encoded laser beam to the array of qubits (A),
the position of the phase pattern on the received laser beam being chosen so that each zone of phase of the encoded laser beam be applied on a specific qubit or group of qubits of the array of qubits, the local rotations of the qubits of the array of qubits depending on the phase of the encoded laser beam at the location of each qubit.

### BRIEF DESCRIPTION OF THE DRAWINGS

The invention will be easier to understand in view of the following description, provided solely as an example and with reference to the appended drawings in which:
- Figure 1 is a schematic view of an example of a quantum system comprising a generator of an array of qubits and an assembly comprising a laser beam generator and a device for performing local rotations on qubits of an array of qubits, and
- Figure 2 is a schematic view of an example of a device for performing local rotations on qubits of an array of qubits, with additional details showing an example of the wavefront of the laser beam before and after passing through the device, as well as the plane of the array of qubits with an example of induced rotations on qubits.

### DETAILED DESCRIPTION OF SOME EMBODIMENTS

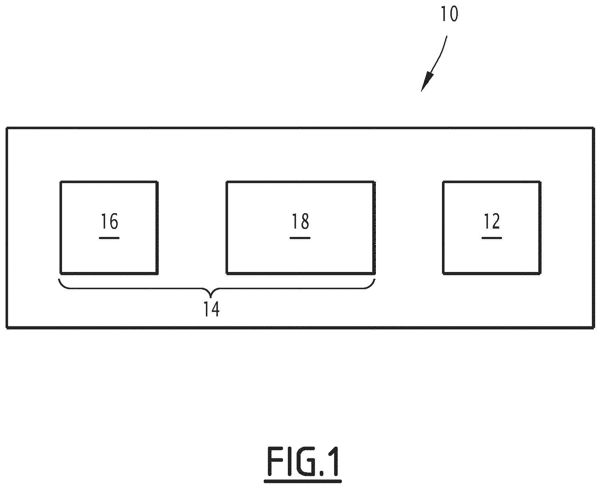

An example of a quantum system 10 is schematically illustrated on figure 1.

The quantum system 10 is, for example, a quantum computing device (or quantum processing unit), a quantum sensor, a quantum communication device or a quantum cryptographic device.

Typically, the quantum system 10 uses the quantum properties of matter, such as superposition and entanglement, to perform operations on data. Unlike a classical computer based on transistors working on binary data (coded on bits, 0 or 1), the quantum computing device works on qubits whose quantum state can take a continuous rather than discrete number of values.

In particular, a qubit refers to a two-level quantum mechanical system. For example, a qubit comprises two basic quantum states l0> and l1> representing the possible quantum states of the qubit. According to the superposition principle of quantum mechanics, any superposition of the form al0> + bl1> (a and b being complex numbers and aa*+bb*=1) is a possible quantum state of the qubit.

As illustrated on figure 1, the quantum system 10 comprises a generator 12 of an array of qubits A and an assembly 14 comprising a laser beam generator 16 and a device 18 for performing local rotations on qubits of the array of qubits A.

Preferably, the qubits of the array of qubits A are particles such as neutral atoms. However, in other embodiments, the invention could be used with other optically addressable qubits or particles, such as, superconducting qubits, NV centers (Nitrogen-Vacancy centers), SiV centers (Silicon-Vacancy centers), ions, molecules and quantum dots. More generally, the particles are any particle whose state can be changed by applying light.

In an example of implementation, the generator 12 of an array of qubits A comprises a source of particles, a generator of trapping sites for particles, a detector, and a rearrangement unit (optional). Other embodiments are nonetheless possible.

In the case of neutral atoms, the source of particles comprises a vacuum chamber in which the particles (for example atoms) are located. In particular, during use, a vacuum is created in the vacuum chamber and a dilute atomic vapor is formed in the vacuum chamber. Various cooling processes can be used to cool the dilute atomic vapor, for instance laser cooling, so that the atoms can be trapped. Other embodiments are nonetheless possible.

The generator of trapping sites is able to generate a laser beam which when focused generates an array of trapping sites for particles (e.g., optical tweezers).

In an example of implementation, the generator of trapping sites comprises a laser source, or equivalent, able to generate a laser beam and a beam shaper able to shape the laser beam (e.g., to impart a specific intensity pattern to the laser beam) so as to obtain an array of trapping sites for particles P when the laser beam is focused. The beam shaper is, for example, a spatial light modulator (SLM).

The detector is configured to detect the presence of particle(s) in the qubit register. The detector is, for example, a camera such as a charge-coupled device (CCD) camera, or an Electron-Multiplying CCD (EMCCD) camera, or any suitable imaging technology. For example, in the case of atoms, the camera is suitable to detect the fluorescence emitted from the atoms.

The rearrangement unit (optional) is configured for moving particles from one trapping site to another trapping site. The rearrangement unit comprises a generator of optical moving tweezers. The generator of optical moving tweezers comprises a laser source or equivalent, able to generate a laser beam and a beam shaper able to shape the laser beam (e.g., to impart a specific intensity pattern to the laser beam) so as to obtain an array of optical moving tweezers for particles P when the laser beam is focused. The beam shaper is, for example, a spatial light modulator (SLM).

Examples of quantum processors based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, Septembre 2020. ISSN 2521-327X. doi:10.22331/q-2020-09-21-327. Other embodiments are nonetheless possible.

The assembly 14 is suitable to perform quantum operations on the qubits of the array of qubits A. In particular, the assembly 14 is suitable for performing local rotations on at least some qubits of the array of qubits A.

The laser beam generator 16 is suitable to generate a laser beam.

The laser beam generator 16 comprises a laser source and optionally optics enabling to manipulate, redirect and/or transform the laser beam before reaching the device 18.

The generated laser beam has an arbitrary phase. The phase of the generated laser beam can be uniform or non-uniform.

The generated laser beam has a power and a wavelength which is chosen depending on the array of qubits A and on the type of quantum operations to be performed.

The generated laser beam is a continuous laser beam or a pulsed laser beam.

Preferably, the generated laser beam when directed on the device 18 also propagates along the axis of the array of qubits A so as to be globally applied on the array of qubits A.

The device 18 is suitable for performing local rotations on qubits of the array of qubits A.

Local rotations of a qubit of an array of qubits A depends on the phase of the light applied at the qubit location between two successive times, so depends on the phase difference applied at the qubit location between two successive times. The device 18 is suitable for controlling the phase encoding of light at the qubit location. More precisely, the device 18 is suitable for encoding position-dependent phases on the beam which drives the qubits of the array of qubits A.

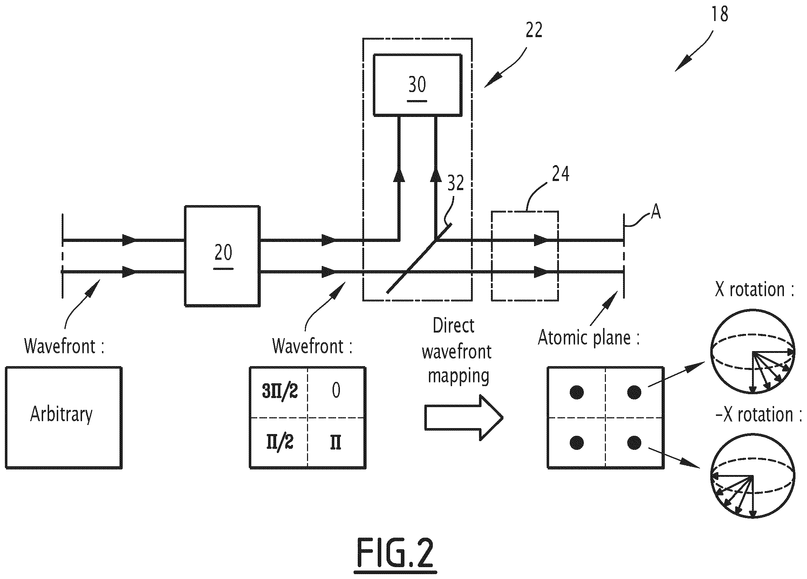

As illustrated on the example of figure 2, the device 18 comprises an optical phase modulation device 20. Optionally, the device 18 also comprises a wavefront verification unit 22 and/or an optical unit 24.

The optical phase modulation device 20 is suitable to receive a laser beam. For example the laser beam has been generated by the laser beam generator 16.

The optical phase modulation device 20 is also suitable to locally encode a phase pattern on the received laser beam so as to obtain an encoded laser beam, and to transmit the encoded laser beam to the array of qubits A.

By the term "locally", it is understood that the phase applied on the laser beam can be different depending on different local zones of the laser beam. The local zones, also called zones, are different parts of a same section of the laser beam, the section being orthogonal to the beam propagation axis. The encoded laser beam has thus different zones of phase considering a same section of the laser beam.

The position of the phase pattern on the received laser beam is chosen so that each zone of phase of the encoded laser beam be applied on a specific qubit or group of qubits of the array of qubits A. The local rotations of the qubits of the array of qubits A depends on the phase (absolute) of the encoded laser beam at the location of each qubit.

The phase pattern is an absolute phase. More precisely, the local rotations of the qubits at the location of each qubit depend on the difference of phase between the phase (absolute) of the encoded laser beam and the phase (absolute) of a laser beam applied immediately before or immediately after.

In an example of implementation, the optical phase modulation device 20 comprises a control electronics and/or calculator (classical) enabling to determine the phase pattern as a function of the position of each qubit on the array of qubits A and the local rotations to be performed on each qubit. For example, the angle of local rotation is directly given by the phase value of the optical phase modulation device 20, and the spatial distribution of phases can be determined, for example using the wavefront verification unit 22, which can be optically mapped to the atoms, or via measurement directly on the atoms.

Preferably, the optical phase modulation device 20 comprises a spatial light modulator (SLM) suitable to effectively apply the phase pattern on the received laser beam. In a variant, the optical phase modulation device 20 comprises lithographic plates, or any other device suitable to apply a phase pattern on a laser beam.

In the example of figure 2, the optical phase modulation device 20 applies four different phases on four zones of the laser beam. Each of the four zones corresponds to a specific qubit (atom) of the array of qubits A. Hence, depending on the phase of the laser beam received by each qubit, a different rotation is applied.

Preferably, the optical phase modulation device 20 is suitable to encode a different phase pattern on some same zones of the received laser beam at two successive times. By the term "same zones", it is understood zones corresponding to a same position for a same section of the laser beam (the section being orthogonal to the beam propagation axis). The local rotations of the qubits of the array of qubits A depends on the phase difference of the encoded laser beam received by each qubit between the two successive times. For example, the phase pattern is modified or moved between the two successive times.

In a variant, the optical phase modulation device 20 is first switched off, then switched on, and the phase difference is between the laser beam received by each qubit when the optical phase modulation device 20 is switched off and the encoded laser beam received by each qubit when the optical phase modulation device 20 is switched on.

The wavefront verification unit 22 (optional) is suitable to measure at successive times the phase of the encoded laser beam at the array of qubits A. On this basis, the wavefront verification unit 22 is suitable to compute the phase difference between successive times.

Preferably, the wavefront verification unit 22 is suitable to check whether the measured phase differences between successive times comply with predetermined phase differences. The predetermined phase differences are, for example, phase differences determined for each qubit of the array of qubits A in order to perform local rotations of the qubits.

In an example of implementation, illustrated on figure 2, the wavefront verification unit 22 comprises a phase sensitive unit 30 and a separation unit 32.

The phase sensitive unit 30 is suitable to measure the phase of a wavefront.

The phase sensitive unit 30 comprises, for example, a Shack-Hartmann wavefront analyzer or any other wavefront analyzer using a micro-lens array to measure the wavefront locally.

The separation unit 32 is suitable to separate the encoded laser beam into two sub-beams, and to send one sub-beam to the array of qubits A and the other sub-beam to the phase sensitive unit 30. The separation unit 32 is, for example, a beamsplitter, such as a lame or a cube.

The optical unit 24 (optional) is suitable to transmit the encoded laser beam from the optical phase modulation device 20 to the array of qubits A.

In an example, the optical unit 24 is suitable for modifying the size of the encoded laser beam between the encoded laser beam and the array of qubits A.

In complement or in a variant, the optical unit 24 is suitable for steering (displacing) the encoded laser beam, for example using a beam steering device such as an acousto-optics modulator, so as to apply the encoded laser beam on only some of the qubits of the array of qubits A. This enables to perform local rotations on specific qubits, leaving the others qubits untouched.

In complement or in a variant, the optical unit 24 is suitable for multiplexing the encoded laser beam, so as to apply the encoded laser beam on only some of the qubits of the array of qubits A. This enables to perform local rotations on specific qubits, leaving the others qubits untouched.

A method for performing local rotations on qubits of an array of qubits A using the above device 18 will now be described.

First, the optical phase modulation device 20 receives a laser beam. The laser beam has for example been generated by the laser beam generator 16.

Then, the optical phase modulation device 20 locally encodes a phase pattern on the received laser beam so as to obtain an encoded laser beam.

Finally, the optical phase modulation device 20 transmits the encoded laser beam to the array of qubits A. This entails the local rotations of the qubits of the array of qubits A depending on the phase of the encoded laser beam at the location of each qubit.

Optionally, the wavefront verification unit 22 measures at successive times the phase of the encoded laser beam at the array of qubits A. On this basis, the wavefront verification unit 22 computes the phase difference between successive times.

Preferably, the wavefront verification unit 22 checks whether the measured phase differences between successive times complies with predetermined phase differences. If not, actions are for example taken so as to modify the phase pattern generated by the optical phase modulation device 20 in order to reach the predetermined phase differences.

As an illustrative example, two atoms are considered, and prepared into one of the qubit state.

A π/2 pulse is applied on the qubit transition, with a phase encoding which is different for each atom using the device 18 and method described above.

Then another π/2 pulse is applied, with an auxiliary beam which does not exhibit such phase encoding, or the same beam with a different phase encoding than previously applied, or using the same beam but with a steering device which displaces the phase pattern on the atoms.

The states of the atoms are then readout. This enables checking the local rotations of the qubits of the array of qubits A.

This process can be repeated for various global phases of the second pulse (by piloting an acousto-optic modulator for example) and measure the atoms state as a function of this global phase. The results can then be fitted with a sine function for each atom, which enables to obtain a phase difference between the two atoms. This phase difference in the fit is given by the phase difference between the two atoms thanks to the optical phase modulation device 20.

The overall process can be repeated for various phase encoding in order to show an arbitrary control over them.

Hence, the invention allows for performing an elementary operation (local rotations about arbitrary axes) which could not be done before using a single pulse, and perform such operation in a robust fashion in regard to opto-mechanical noises.

In particular, the described device 18 enables to encode position-dependent phases on the beam which drives the qubits. When hitting the qubits with such global beam, the axis of rotation which is applied to each qubit depends on the phase of the beam at the atom location. By controlling this phase encoding and the position of this encoding on the beam with the device 18, local rotations of the qubits around arbitrary axes is therefore achieved.

This solution is also robust to noises, as it uses a global beam. Further, noises globally affecting the beam phase are not relevant as only the difference in phase matters for the qubits, and therefore should not impact the phase encoding.

Hence, the invention enables to perform local rotations along arbitrary axes of qubits of an array of qubits A with an improved fidelity.

The person skilled in the art will understand that the embodiments and variants described above in the description can all be combined provided that they are technically compatible. Many other embodiments are possible without departing from the scope of the invention defined in the appended claims.

## Claims

1. Device (18) for performing local rotations on qubits of an array of qubits (A), the device (18) comprising an optical phase modulation device (20) suitable to:
- receive a laser beam,
- locally encode a phase pattern on the received laser beam so as to obtain an encoded laser beam, the encoded laser beam having different zones of phase, and
- transmit the encoded laser beam to the array of qubits (A),
the position of the phase pattern on the received laser beam being chosen so that each zone of phase of the encoded laser beam be applied on a specific qubit or group of qubits of the array of qubits (A), the local rotations of the qubits of the array of qubits (A) depending on the phase of the encoded laser beam at the location of each qubit.

2. Device (18) according to claim 1, wherein the optical phase modulation device (20) is suitable to encode a different phase pattern on some same zones of the received laser beam at two successive times, the local rotations of the qubits of the array of qubits (A) depending on the phase difference of the encoded laser beam received by each qubit between the two successive times.

3. Device (18) according to claim 1 or 2, wherein the optical phase modulation device (20) comprises a spatial light modulator.

4. Device (18) according to any one of claims 1 to 3, wherein the device (18) comprises a wavefront verification unit (22), the wavefront verification unit (22) being suitable to measure at successive times the phase of the encoded laser beam at the array of qubits (A).

5. Device (18) according to claim 4, wherein the wavefront verification unit (22) is suitable to check whether the measured phase differences between successive times comply with predetermined phase differences.

6. Device (18) according to claim 4 or 5, wherein the wavefront verification unit (22) comprises:
- a phase sensitive unit (30) suitable to measure the phase of a wavefront, and
- a separation unit (32) suitable to separate the encoded laser beam into two sub-beams, and to send one sub-beam to the array of qubits (A) and the other sub-beam to the phase sensitive unit (30).

7. Device (18) according to claim 6, wherein the phase sensitive unit (30) comprises a wavefront analyzer comprising a micro-lens array suitable to measure the wavefront locally, the wavefront analyzer being preferably a Shack-Hartmann wavefront analyzer.

8. Device (18) according to any one of claims 1 to 7, wherein the device (18) comprises an optical unit (24) suitable to transmit the encoded laser beam from the optical phase modulation device (20) to the array of qubits (A).

9. Device (18) according to any one of claims 1 to 8, wherein the optical unit (24) is suitable for modifying the size of the encoded laser beam between the encoded laser beam and the array of qubits (A) and/or to steer or multiplex the encoded laser beam so as to apply the encoded laser beam on only some of the qubits of the array of qubits (A).

10. Assembly (14) comprising:
- a laser beam generator (16) suitable to generate a laser beam, and
- a device (18) for performing local rotations on qubits of an array of qubits (A) according to any one of claims 1 to 9, the device (18) being suitable to receive the laser beam generated by the laser beam generator (16).

11. Quantum system (10) comprising a generator (12) of an array of qubits (A) and an assembly (14) according to claim 10.

12. Quantum system (10) according to claim 11, wherein the qubits of the array of qubits (A) are particles such as neutral atoms, superconducting qubits, Nitrogen-Vacancy centers, Silicon-Vacancy centers, ions, molecules and quantum dots.

13. Method for performing local rotations on qubits of an array of qubits (A), the method being implemented by a device (18) according to any one of claims 1 to 9 and comprising the following steps:
- receiving a laser beam,
- locally encoding a phase pattern on the received laser beam so as to obtain an encoded laser beam, the encoded laser beam having different zones of phase, and
- transmitting the encoded laser beam to the array of qubits (A),
the position of the phase pattern on the received laser beam being chosen so that each zone of phase of the encoded laser beam be applied on a specific qubit or group of qubits of the array of qubits (A), the local rotations of the qubits of the array of qubits (A) depending on the phase of the encoded laser beam at the location of each qubit.
